(19) Europäisches Patentamt
European Patent Office
Office européen des brevets

(11) Veröffentlichungsnummer: **0 248 108 B1**

(12) **EUROPÄISCHE PATENTSCHRIFT**

(45) Veröffentlichungstag der Patentschrift: **03.07.91**

(51) Int. Cl.5: **A01K 1/10**

(21) Anmeldenummer: **86113557.2**

(22) Anmeldetag: **02.10.86**

(54) **Käfigbox für die Masttierhaltung.**

(30) Priorität: **27.05.86 DE 8614310 U**

(43) Veröffentlichungstag der Anmeldung:
**09.12.87 Patentblatt 87/50**

(45) Bekanntmachung des Hinweises auf die
Patenterteilung:
**03.07.91 Patentblatt 91/27**

(84) Benannte Vertragsstaaten:
**AT BE CH DE FR GB LI NL**

(56) Entgegenhaltungen:
**DE-B- 2 701 119**
**DE-U- 7 103 252**

(73) Patentinhaber: **Wessjohann, Hubert**
**Bokeler Strasse 14**
**W-4598 Cappeln(DE)**

(72) Erfinder: **Wessjohann, Hubert**
**Bokeler Strasse 14**
**W-4598 Cappeln(DE)**

(74) Vertreter: **Busse & Busse Patentanwälte**
**Postfach 1226 Grosshandelsring 6**
**W-4500 Osnabrück(DE)**

# Beschreibung

Die Erfindung bezieht sich auf eine Käfigbox für die Masttierhaltung in einer Ausbildung nach dem Oberbegriff des Patentanspruchs 1.

Bei einer intern bekannten Käfigbox der vorgenannten Art sind die an gegenüberliegenden Endbereichen des Käfigraumes vorgesehenen Schwenktore als um Vertikalachsen schwenkbare Doppelflügeltüren ausgebildet, die durch elektronisch gesteuerte Betätigungselemente solange blockierbar sind, bis das im Käfigraum eingeschlossene Masttier die ihm zugeteilte Futterportion verzehrt hat. Nach Freigabe der Schwenktore hat ein nachfolgendes Masttier das noch im Käfigraum befindliche Masttier auszutreiben, was sich in der Praxis vielfach als schwierig erweist und häufig dazu führt, daß ein reibungsloser, kontinuierlicher Einzelfütterungsbetrieb durch mehrere im Käfigraum eingeschlossene oder festgehaltene Masttiere nicht möglich ist.

Aus dem DE-U 71 03 252 ist eine Käfigbox für die Schweinehaltung mit einen Käfigraum seitlich begrenzenden Wandteilen und einem im vorderen Käfigraum angeordneten Futtertrog bekannt. Der Käfigraum ist nur von hinten her zugänglich, so daß das Schwein von hinten zur Fütterung eintreten muß, nach der Fütterung aber auch hinten und damit durch eine Rückwärtsbewegung austreten muß. Ein reibungsloser Einzelfütterungsbetrieb ist mit dieser Box gleichfalls nicht möglich, da das Schwein gegen nachrückende und nachdrängende Tiere austreten muß, womit eine erhebliche Unfallgefahr für das austretende Tier und die nachrückenden Tiere einhergeht. Um wenigstens das in der Box befindliche Tier gegen nachrückende Tiere zu sichern, ist der Käfigraumzutritt durch einen gewichtsbelasteten Verschlußkörper zu sichern, der mit einem Hebeglied oberhalb des Futtertroges gekoppelt ist. Durch das in der Box befindliche Tier ist das Hebeglied beim Freßvorgang zu verschwenken, womit gleichfalls der Verschlußkörper in seine Schließstellung gebracht wird. Dabei ist jedoch nicht ausgeschlossen, daß durch nachdrängende Tiere der Käfigraumzutritt bereits blockiert ist und damit sowohl Verschlußkörper als auch Hebeglied nicht in ihre Verschluß- bzw. Freigabestellung gebracht werden können.

Die Erfindung hat sich die Aufgabe gestellt, eine Käfigbox für die Masttierhaltung der eingangs genannten Art zu schaffen, mit der für einen kontinuierlichen, reibungslosen Fütterungsablauf das Masttier nach der Fütterung sicher aus der Käfigbox zu bewegen ist. Zur Lösung dieser Aufgabe sieht die Erfindung die im kennzeichnenden Teil des Anspruchs 1 angegebene Gestaltung vor.

Bei der Käfigbox nach der Erfindung wird das im Käfigraum befindliche Masttier durch den einwärts verschwenkbaren Austreibkörper nach dem Verzehr der zugeteilten Futterration auf pflegsame Weise aus der Käfigbox gedrängt, bevor ein nachfolgendes Masttier an den Futtertrog gelangen kann. Die Verschwenkung des Austreibkörpers und die Öffnungs- bzw. Schließbewegung der Schwenktore ist mit baulich einfachen Mitteln sowohl vom Bewegungs- als auch vom Zeitablauf mit geeigneten, z.B. elektronisch gesteuerten Betätigungseinrichtungen wie Stellzylindern zu vollziehen bzw. aufeinander abzustimmen. Der Fütterungsablauf ist kontinuierlich und weitgehend automatisch durchzuführen. Der Austreibkörper ist auf baulich einfache Weise den jeweiligen räumlichen Gegebenheiten der Käfigbox, die in der Regel im Grundriß rechteckig gestaltet ist, anzupassen. Bevorzugt ist der Austreibkörper um eine Horizontalachse von oben einwärts in den Käfigraum verschwenkbar und als das Eintrittsschwenktor der Käfigbox ausgebildet, so daß durch den Austreibkörper Mehrkosten für die Herstellung und den Betrieb der Käfigbox nicht anfallen. Weitere Merkmale und Einzelheiten der Erfindung sind in weiteren Unteransprüchen, der nachfolgenden Beschreibung und der Zeichnung angegeben. In der Zeichnung zeigen:

Fig. 1    In einer schematischen Seitendarstellung ein Ausführungsbeispiel der Käfigbox mit seitlich angehängtem Futtertrog;

Fig. 2    eine Vorderansicht (Eintrittsseite) des Ausführungsbeispiels nach Fig. 1;

Fig. 3    ein weiteres Ausführungsbeispiel der Käfigbox in einer schematischen Seitendarstellung.

In der Zeichnung sind nur die zum unmittelbaren Verständnis der Erfindung notwendigen Elemente der Käfigbox dargestellt sowie grundsätzlich gleichwirkende Teile mit gleichen Bezugsziffern versehen. Die in der Zeichnung dargestellte, allgemein mit 1 bezifferte Käfigbox für die Masttierhaltung ist als Einzelfütterungskäfigbox für Schweine ausgebildet und besteht aus einem Gitterrahmengestell mit einer einen Käfigraum 2 umgrenzenden Seitenwandung 3 sowie mit oberen Gitterquerstäben 4. In der rückwärtigen Längsseitenwand 5 ist eine Ausnehmung 6 vorgesehen, durch die ein angehängter Futtertrog 7 zugänglich ist. Schematisch angedeutet ist ein Schneckenkörper 8 und ein Trichter 9, über die die Futterration dem Futtertrog 7 zugeführt wird. Im einzelnen nicht näher dargestellt kann die Futterration über eine automatisch arbeitende Futterrationsdosierung mit elektronischen Betätigungselementen erfolgen, die mit am Hals des Masttieres getragenen Sensoren zusammenwirken, so daß eine exakte Futterrationdosierung für jedes einzelne Masttier möglich ist.

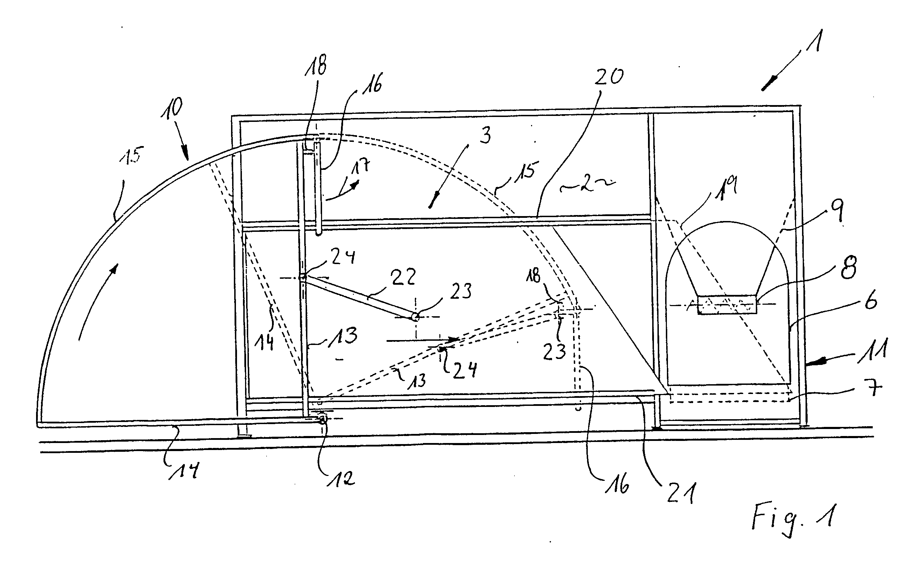

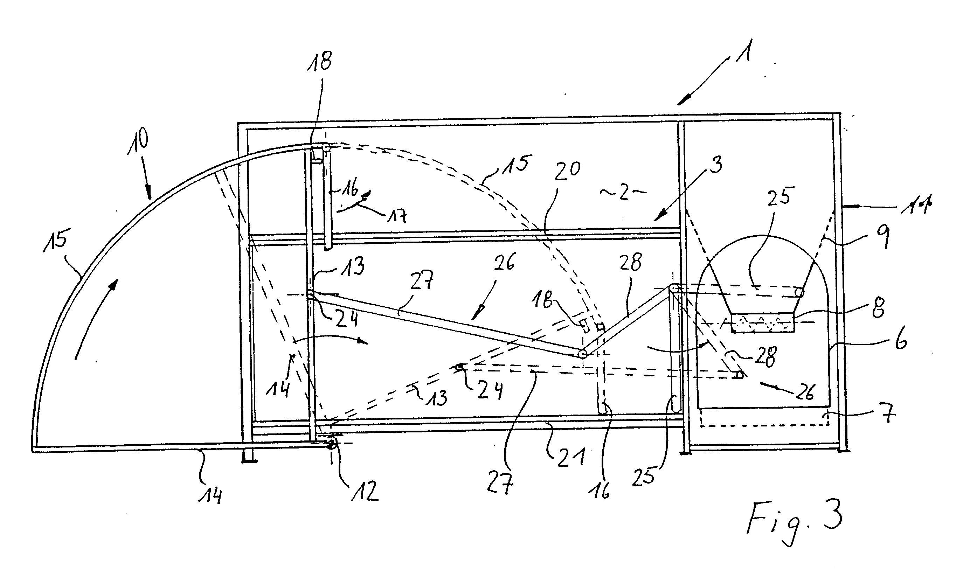

An der Eintrittsseite der Käfigbox umfaßt die Seitenwandung 3 einen korbartig gestalteten, um eine Horizontalachse 12 schwenkbaren Austreibkörper 10, der zugleich als Eintrittsschwenktor ausgebildet ist. Wie in den Fig. 1 und 3 mit durchgezogenen Linien angedeutet ist, verschließt der Austreibkörper 10 in seiner Ausgangsstellung den Käfigraum 2 nach außen hin. An dem dem Austreibkörper 10 gegenüberliegenden Stirnendbereich 11 ist ein im einzelnen nicht näher dargestelltes Austrittsschwenktor vorgesehen, das als Doppelflügeltür oder in sonstiger geeigneter Weise, z.B. als Schwenkgitter, ausgebildet sein kann. Zur Schwenkbetätigung des Austreibkörpers 10 bzw. des Eintrittsschwenktores und des Austrittsschwenktores sind im einzelnen nicht näher dargestellte Betätigungszylinder vorgesehen, die über geeignete, mit der Futterdosiereinrichtung bzw. den am Hals des Masttieres gehaltenen Sensoren zusammenwirkende elektronisch betätigbare Steuermechanismen ausgelöst werden.

Der um die Horizontalachse 12 einwärts in die in den Fig. 1 und 3 gestrichelt dargestellte Lage verschwenkbare Austreibkörper 10 ist korbartig mit jeweils abgewinkelten Seitenstreben 13, 14 und mit bogenförmig gestalteten Gitterstäben 15 als Mantelbegrenzung versehen. Die Seitenstreben 13 und 14 erstrecken sich bis zum oberen Endbereich der Seitenwandung 3. Die Seitenstrebe 14 ist am unteren Endbereich der Seitenwandung 3 angelenkt. Am oberen Endbereich der Seitenstrebe 13 ist ein in den Käfigraum 2 verschwenkbarer Austreibbügel 16 in Pfeilrichtung 17 schwenkbeweglich angeordnet, dessen Schwenkbeweglichkeitsbereich durch den an der Seitenstrebe 13 befestigten Schwenkbügelanschlag 18 begrenzt ist. Die Längs- und Hochabmessungen der Käfigbox 1 und des Austreibkörpers 10 mit seinem Austreibbügel 16 sind dabei zweckmäßigerweise so bemessen, daß der Austreibbügel 16 während der Futteraufnahme des Masttieres sich kurz hinter dessen Hinterteil befindet, so daß bei der Einwärtsschwenkbewegung des Austreibkörpers 10 bei geöffnetem Austrittsschwenktor das in der Käfigbox befindlichem Masttier durch den Austreibbügel 16 pflegsam und sicher aus der Käfigbox 1 gedrängt wird. In der gestrichelt dargestellten Austreibstellung des Austreibkörpers 10 ist der Austreibbügel 16 verschwenkt und erstreckt sich bis zum unteren Endbereich der Käfigbox 1, so daß der Käfigraum 2 von dem Austreibkörper 10 mit seinem Austreibkörper vollständig durchdrungen ist. In dieser Austreib-bzw. Innenstellung ist damit das der Ausnehmung 6 zugeordnete Käfigrauminnere für ein nachfolgendes Masttier noch abgesperrt. Das nachfolgende Masttier kann jedoch den Käfigraum in dem vor dem Austreibbügel 16 gelegenen Bereich schon betreten. Zur vollständigen Freigabe des Käfigraumes 2 wird der Austreibkörper 10 mit seinen Gittermantelstäben dann über das Masttier in die die Käfigbox 1 vollständig absperrende Ausgangsstellung verschwenkt.

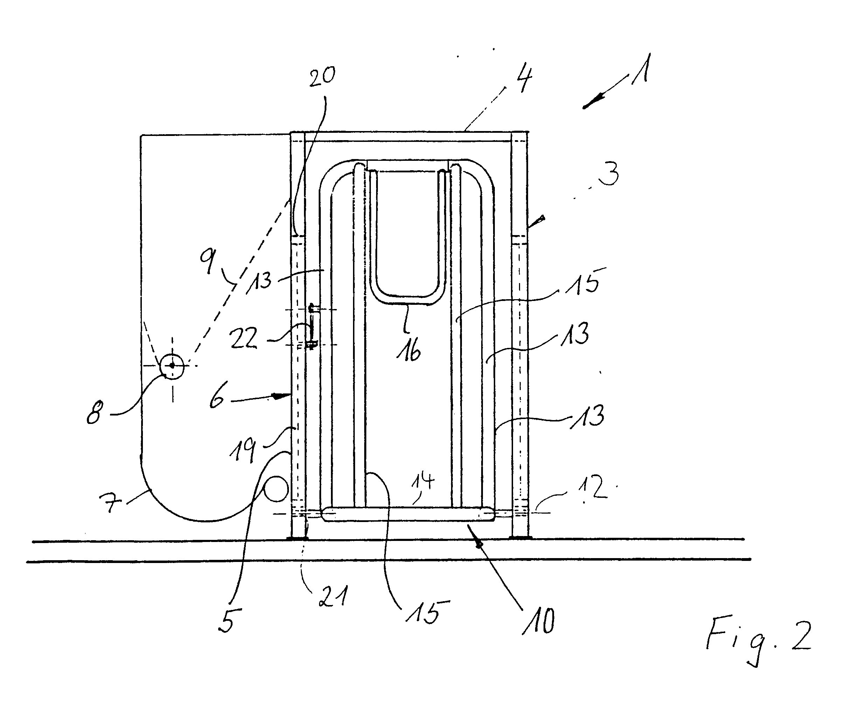

Der Austreibkörper 10 ist in dem in Fig. 1 und 2 dargestellten Ausführungsbeispiel mit einem wandartig ausgebildeten Verschlußglied 19 gekoppelt, durch die die Ausnehmung 6 bzw. die Futtertrogöffnung abzusperren und zudem der Austreibvorgang zu unterstützen ist. Das Verschlußglied 19 ist Bestandteil der rückwärtigen Längsseitenwand 5 und entlang von Gitterlängsstreben 20 und 21 geführt. Zur Bewegungskoppelung des Verschlußgliedes 19 mit dem Austreibkörper 10 ist eine Verbindungsstrebe 22 bei 23 und 24 einerseits an einem mittigen Zentralbereich des Verschlußgliedes 19 und andererseits an der Seitenstrebe 13 angelenkt und mit dem Austreibkörper 10 in die in Fig. 1 gestrichelt dargestellte Lage zu verschwenken. Die der Ausnehmung 6 zugewandte Stirnkante des wandartigen Verschlußgliedes 19 läuft von oben schräg nach unten zu, so daß während der Längsverschiebung des Verschlußgliedes 19 bzw. der Austreibschwenkbewegung das eingeschlossene Masttier gezwungen wird, den Kopf aus der Ausnehmung zu nehmen. Durch die schräg zulaufende Gestalt des wandartigen Verschlußgliedes 19 ist sichergestellt, daß ein ausreichender Freiraum zum Herausnehmen des Kopfes verbleibt. Durch die Bewegungskopplung des Austreibkörpers mit dem Verschlußglied ist ein Austreiben eines eingeschlossenen Masttieres auch in den Fällen problemlos und behinderungsfrei durchzuführen, indem beispielsweise in dem Futtertrog 7 noch Futterreste vorhanden sind.

Bei dem in Fig. 3 dargestellten Ausführungsbeispiel erfolgt bei ansonsten vollkommen analoger Gestaltung der Käfigbox 1 die Absperrung der Ausnehmung 6 mittels eines an der rückwärtigen Längsseitenwand 5 schwenkbeweglich festgelegten Schwenkarms 25, der mittels eines Knickarms 26 mit gelenkig miteinander verbundenen Armteilen 27 und 28 mit der an der rückwärtigen Längsseitenwand 5 gelegenen Seitenstrebe 13 des Austreibkörpers 10 bewegungsfest gekoppelt ist. Durch die Austreibschwenkbewegung des Austreibkörpers 10 werden der Schwenkarm 25 und die Armteile 27 und 28 des Knickarms 26 in die in Fig. 3 gestrichelt dargestellten Lagen verschwenkt bzw. bewegt. Anstelle des Schwenkarms 25 und des Knickarms 26 können darüberhinaus auch noch sonstige geeignete, z.B. translatorisch bewegbare oder drehbewegliche Kopplungs- und Absperrelemente zum vollständigen bzw. teilweisen Verschließen der Ausnehmung 6 Verwendung finden. Darüberhinaus ist es auch möglich, selbständig arbeitende Betätigungselemente wie Stellzylinder einzusetzen.

**Ansprüche**

1. Käfigbox für die Masttierhaltung, insbesondere für die Schweinehaltung, mit einer einen Käfigraum (2) umgrenzenden Seitenwandung (3, 4), die eine einem Futtertrog (7) oder dergleichen Stalleinrichtung zuzuordnende Ausnehmung (6) sowie an gegenüberliegenden Endbereichen des Käfigraumes (2) vorgesehene Schwenktore als einerseits Käfigraumeintritt und andererseits Käfigraumaustritt umfaßt, **dadurch gekennzeichnet**, daß ein als Schwenktor ausgebildeter Austreibkörper (10) in eine den Käfigraum (2) zwischen Käfigraumeintritt und Ausnehmung (6) absperrende und den Käfigraum (2) zumindest teilweise durchdringende Innenstellung aus einer Ausgangsstellung in den Käfigraum (2) verschwenkbar ist, wobei der Austreibkörper (10) in der Ausgangsstellung außerhalb des Käfigraumes (2) gelegen ist, und daß der Austreibkörper (10) einen Austreibbügel (16) umfaßt, der durch die Schwenkbewegung des Austreibkörpers (10) aus einer in der Ausgangsstellung des Austreibkörpers (10) unwirksamen Stellung in eine den Käfigraum (2) zwischen Käfigraumeintritt und Ausnehmung (6) versperrende Austreibendstellung verschwenkt wird.

2. Käfigbox nach Anspruch 1, **dadurch gekennzeichnet**, daß der Austreibkörper (10) um eine Horizontalachse (12) in den Käfigraum (2) verschwenkbar ist.

3. Käfigbox nach Anspruch 1 oder 2, **dadurch gekennzeichnet**, daß der Austreibbügel (16) an dem Austreibkörper (10) angelenkt ist.

4. Käfigbox nach Anspruch 3, **dadurch gekennzeichnet**, daß an dem Austreibkörper (10) ein Anschlag (18) zur Begrenzung der Schwenkbeweglichkeit des Austreibbügels (16) vorgesehen ist.

5. Käfigbox nach einem der Ansprüche 1 bis 4, **dadurch gekennzeichnet**, daß der Austreibkörper (10) am unteren Endbereich der Seitenwandung (3) angelenkt ist und bis zum oberen Endbereich der Seitenwandung (3) reichende Seitenstreben (13, 14) hat.

6. Käfigbox nach einem der Ansprüche 1 bis 5, **dadurch gekennzeichnet**, daß der Austreibkörper (10) korbartig mit jeweils abgewinkelten Seitenstreben (13, 14) und einer im wesentlichen bogenförmigen Mantelflächenbegrenzung (15) ausgebildet ist.

7. Käfigbox nach einem der Ansprüche 1 bis 6, **dadurch gekennzeichnet**, daß der Austreibkörper (10) mit einer beweglichen Absperrung (19, 25) für die Ausnehmung (6) der Seitenwandung (3) koppelbar ist.

8. Käfigbox nach Anspruch 7 mit einem im Grundriß im wesentlichen rechteckigen Käfigraum und einer geradlinigen Längsseitenwandung, in der die Ausnehmung vorgesehen ist, **dadurch gekennzeichnet**, daß die die Ausnehmung (6) enthaltende Längsseitenwand (5) der Seitenwandung (3) ein längsverschiebliches, die Absperrung bildendes Verschlußglied (19) umfaßt, das mittels einer an dem Austreibkörper (10) angelenkten Verbindungsstrebe (22) mit diesem koppelbar ist.

9. Käfigbox nach Anspruch 8, **dadurch gekennzeichnet**, daß das längsverschiebliche Verschlußglied (19) wandartig mit einem schräg nach unten zulaufenden Stirnende gestaltet ist und zumindest bereichsweise die Längsseitenwand (5) bildet.

10. Käfigbox nach Anspruch 7, **dadurch gekennzeichnet**, daß die Absperrung durch einen an der Längsseitenwand (5) beweglich festgelegten Schwenkarm (25) oder einen die Ausnehmung (6) absperrenden Schwenkkörper gebildet ist, der mittels eines am Austreibkörper (10) und an der Längsseitenwand (5) festgelegten Knickarms (26) in seine Absperrstellung bringbar ist.

**Claims**

1. A cage-type box for raising fat stock, particularly for keeping pigs, with, defining a cage space (2), side walls (3, 4) comprising an aperture (6) which is to be associated with a feed trough (7) or similar stall arrangement, and comprising at opposite end zones of the cage space (2) pivotable gates which provide a cage space entrance at one end and a cage space exit at the other, characterised in that an ejector member (10) constructed as a pivotable gate can be pivoted into the cage space (2) from a starting position into an inner position which shuts off the cage space (2) between the cage entrance and the aperture (6) and at least partially penetrates the cage space (2), the ejector member (10) is disposed outside the cage space (2) when it is in the starting position and in that the ejector member (10) comprising a bow-shaped ejector (16) which by the pivoting movement of the ejector member (10) is pivoted out of a position which is inoperative in the starting position of the ejector member (10) into an extreme ejection position which shuts off the cage space (2) between the cage entrance and the aperture (6).

2. A cage-type box according to Claim 1, characterised in that the ejector member (10) is pivotable about a horizontal axis (12) and into the cage space (2).

3. A cage-type box according to Claim 1 or 2, characterised in that the bow-shaped ejector (16) is articulated on the ejector member (10).

4. A cage-type box according to Claim 3, characterised in that provided on the ejector member (10) is an abutment (18) for limiting the pivotability of the bow-shaped ejector (16).

5. A cage-type box according to one of Claims 1 to 4, characterised in that the ejector member (10) is articulated on the lower end portion of the side wall (3) and has lateral struts (13, 14) which extend as far as the upper end portion of the side wall (3).

6. A cage-type box according to one of Claims 1 to 5, characterised in that the ejector member (10) is of basket-like construction having in each case angled-over lateral struts (13, 14) and a substantially arcuate outer surface (15).

7. A cage-type box according to one of Claims 1 to 6, characterised in that the ejector member (10) can be coupled to a movable barrier (19, 25) for the aperture (6) in the side wall (3).

8. A cage-type box according to Claim 7 having a cage space which is substantially rectangular in plan and having a straight longitudinal side wall in which the aperture is provided, characterised in that the longitudinal side wall (5) of the side wall (3) containing the aperture (6) comprises a longitudinal displaceable closure member (19) which constitutes the barrier and which can be coupled to the ejector member (10) by means of a connecting strut (22) articulated on this latter.

9. A cage-type box according to Claim 8, characterised in that the longitudinally displaceable closure member (19) is of wall-like construction with an obliquely downwardly converging end and in that at least portions thereof form the longitudinal side wall (5).

10. A cage-type box according to Claim 7, characterised in that the barrier is formed by a pivot arm (25) which is movably mounted on the longitudinal side wall (5) or by a pivoting member which shuts off the aperture (6) and which can be moved into its barrier position by means of a bent arm member (26) which is fixed on the longitudinal side wall (5).

## Revendications

1. Box-cage pour l'élevage d'animaux à l'engrais, en particulier pour l'élevage de porcins, comportant une paroi latérale (3, 4) délimitant une cage (2), qui comprend une découpe (6) destinée à être associée à une auge ou à un autre équipement de stabulation ainsi que des portes pivotantes prévues aux zones d'extrémité opposées de la cage (2) et servant, d'un côté, d'entrée de cage et de l'autre, de sortie de cage, caractérisé en ce qu'un organe d'expulsion (10) se présentant sous la forme d'une porte pivotante peut pivoter dans la cage (2), à partir d'une position de départ, vers une position intérieure dans laquelle il ferme la cage (2) entre l'entrée de cage et la découpe (6) et traverse au moins partiellement la cage (2), l'organe d'expulsion (10) se trouvant à l'extérieur de la cage (2) dans la position de départ et comprenant un étrier d'expulsion (16) qui, lors du pivotement de l'organe d'expulsion (10), pivote depuis une position de repos dans la position de départ de l'organe d'expulsion (10) vers une position finale d'expulsion fermant la cage (2) entre l'entrée de cage et la découpe (6).

2. Box-cage suivant la revendication 1, caractérisé en ce que l'organe d'expulsion (10) peut pivoter autour d'un axe horizontal (12) à l'intérieur de la cage (2).

3. Box-cage suivant la revendication 1 ou 2, caractérisé en ce que l'étrier d'expulsion (16) est articulé à l'organe d'expulsion (10).

4. Box-cage suivant la revendication 3, caractérisé en ce qu'une butée (18) est prévue sur l'organe d'expulsion (10) pour limiter le degré de pivotement de l'étrier d'expulsion (16).

5. Box-cage suivant l'une quelconque des revendications 1 à 4, caractérisé en ce que l'organe d'expulsion (10) est articulé à la zone d'extrémité inférieure de la paroi latérale (3) et présente des barres latérales (13, 14) s'étendant jusqu'à la zone d'extrémité supérieure de la paroi latérale (3).

6. Box-cage suivant l'une quelconque des revendications 1 à 5, caractérisé en ce que l'organe d'expulsion (10) a la forme d'un panier et comporte des barres latérales coudées respectives (13, 14) et une délimitation de surface convexe (15) en substance arquée.

7. Box-cage suivant l'une quelconque des revendications 1 à 6, caractérisé en ce que l'organe d'expulsion (10) peut être couplé à un élément d'obturation mobile (19, 25) de la découpe (6) de la paroi latérale (3).

8. Box-cage suivant la revendication 7, comportant une cage en substance rectangulaire en plan et une paroi latérale longitudinale droite dans laquelle est prévue la découpe, caractérisé en ce que la partie latérale longitudinale (5) de la paroi latérale (3) contenant la découpe (6) comporte un organe de fermeture (19) coulissant dans le sens longitudinal et formant l'élément d'obturation, qui peut être couplé à l'organe d'expulsion par l'intermédiaire d'une barre de liaison (22) articulée à cet organe d'expulsion (10).

9. Box-cage suivant la revendication 8, caractérisé en ce que l'organe de fermeture (19) coulissant dans le sens longitudinal a la forme d'une paroi présentant une extrémité d'about s'étendant de manière oblique vers le bas et formant au moins localement la paroi latérale longitudinale (5).

10. Box-cage suivant la revendication 7, caractérisé en ce que l'élément d'obturation est formé par un bras pivotant (25) fixé de manière mobile sur la paroi latérale longitudinale (5) ou par un organe pivotant obturant la découpe (6), qui peut être amené dans sa position d'obturation par l'intermédiaire d'un bras articulé (26) fixé sur l'organe d'expulsion (10) et sur la paroi latérale longitudinale (5).

Fig. 1

Fig. 2

EP 0 248 108 B1

Fig. 3

EP 0 248 108 B1